# EUROPEAN PATENT SPECIFICATION

(11) **EP 4 562 845 B1**
(45) Date of publication and mention of the grant of the patent: **16.09.2026**
(21) Application number: 23733324.0
(22) Date of filing: 19.06.2023
(51) Int. Cl.: H04L 67/12

(54) **METHOD FOR REMOTE MONITORING, DIAGNOSIS AND CONTROL OF AN AUTONOMOUS OFF-HIGHWAY VEHICLE**
VERFAHREN ZUR FERNÜBERWACHUNG, -DIAGNOSE UND -STEUERUNG EINES AUTONOMEN GELÄNDEFAHRZEUGS
PROCÉDÉ DE SURVEILLANCE, DE DIAGNOSTIC ET DE COMMANDE À DISTANCE D'UN VÉHICULE AUTONOME HORS ROUTE

(30) Priority: 28.07.2022 IN 202211043198
(43) Date of publication of application: 04.06.2025
(73) Proprietor: ZF CV Systems Global GmbH, 3006 Bern (CH)
(72) Inventor: NIZAMUDDEEN, Imaduddeen, VELLORE, 631001 (IN); VENUGOPAL, Vaisakh, Porur 600116 (IN); MARIATHANISLAUS, Anto Ajisha Shriny, Tirunelveli, 627657 (IN)
(74) Representative: Rabe, Dirk-Heinrich
(86) International application number: PCT/EP2023/066348
(87) International publication number: WO 2024/022676

(56) References cited:
- US-A1- 2016 210 131

## Description

The present invention relates to a method for remote monitoring, diagnosis and control of an autonomous off-highway vehicle, wherein data comprising software updates and log-data for performing said monitoring, diagnosis and control is transmitted between an Internet-accessible server and a communication unit in the vehicle that is not accessible via the Internet. The invention also relates to an in-vehicle communication unit or control unit to perform the inventive method, to an autonomous off-highway vehicle with such a communication unit or control unit, to a computer program to perform steps of the inventive method and to a mobile device comprising such a computer program.

The deployment of autonomous vehicles independently performing specific tasks without a driver or vehicle operator is on the increase but is still limited in its scope. While, in normal road traffic, autonomous vehicles appear rather scarcely, such vehicles for use off public roads, i.e., for example, vehicles for agricultural use, vehicles in non-public production and factory facilities or vehicles in surface mining / mining are more common. The reason for this is that there, the requirements arising in connection with the operation of autonomous vehicles with regard to the legal framework conditions and the interdependencies with the environment are easier to handle.

The operation of autonomous vehicles usually requires a continuous data connection, i.e. coverage by the Internet, by a radio network or access to specific and steady communication means including a centre or a control centre.

In prior art, systems are already known which render a substantially continuous connection between a control center and vehicles not driving autonomously possible. For example, US 7,155,321 B2 discloses a data and information system for vehicles not driving autonomously in a vehicle fleet which serves to be capable of centrally processing as much information from the vehicles as possible to enable, for example, targeted on-time repair, maintenance, or diagnoses based on the operational parameters.

US 2016/0210131 A1 describes a system for updating vehicle control systems using a mobile device as a proxy. When a connection is interrupted, the vehicle resumes the update download via the mobile device. The communication is initiated by the vehicle (VCS). The system addresses software updates.

In summary, there is the problem that autonomously driving vehicles can be operated even without more comprehensive precautions off public roads and on fenced-off private property, but that precisely these locations are frequently only insufficiently provided with a satisfactory Internet coverage or sufficient radio networks. This results in a conflict of goals which resides in that an operation frequently fails due to the lack of a stable data connection precisely where autonomous vehicles are reasonably deployable.

It is therefore the object of the present invention to provide a method rendering a safe operation of autonomous vehicles possible even in locations where no safe and stable Internet coverage or data connections exist.

This object is solved by the features of the independent claims. Further advantageous embodiments are disclosed in the subclaims. Likewise claimed are communication means capable of implementing the method, a vehicle equipped with such communication means, as well as application software and a mobile device equipped with this software.

In the method of the invention the data for remote monitoring, diagnosis and control of an autonomous off-highway vehicle, comprising software updates and log-data for performing said monitoring, diagnosis and control is transmitted between an Internet-accessible server and a communication unit in the vehicle that is not accessible via the Internet, said transmission executed through at least one other intermediary mobile device.

According to the method of the invention said data is temporarily cached in the mobile device, whereby
- in the event that said data should be transmitted from the server to the vehicle, a first download of said data from the server to the mobile device is triggered by the server through a push notification and download request to an owner of the mobile device, whereby the owner is also prompted to activate a second download of said data from the mobile device to the communication unit in the vehicle, whenever the mobile device is in the vicinity of the autonomous off-highway vehicle and within the reception range of a wireless local network connecting the vehicle and said mobile device,
whereby
- in the event that, with reference to said data, there is a logging request for vehicle log-data from the server, a push notification to an owner of the mobile device is triggered by the server, prompting the owner to first download selected log-data of the autonomous off-highway vehicle to the mobile device whenever the latter is within the reception range of said wireless local network, and to subsequently transfer said selected log-data by a second download from the mobile device to the server as soon as the server is accessible again via Internet.

The advantage of the method according to the invention is that, in the regions in which no complete network coverage by a radio network exists, a mobile device is used for bridging and for the transport of the required data. With the inventive method, only connectivity between the mobile device and the autonomous vehicle is needed in the close range, for example via Bluetooth or via Wi-Fi, while, on the other hand, the possibility of only temporarily connecting the mobile device to a server and/or a database in an area having sufficient network coverage are required.

An embodiment of the invention belongs to a method wherein the mobile device provides a first programmed application software (app) through which updates, software changes and logging data can be detected, selected and transmitted.

Such an app renders the provision of the method according to the invention to each operator of autonomous vehicles possible without the necessity to build up further infrastructure directly on the operator's premises. It is sufficient that the vehicle itself comprises the required means and that the server accessible via the Internet is likewise capable of communicating with the App.

In order to ensure the required safety against manipulation of the transmitted data, the following further embodiments of the method according to the invention are provided. In one embodiment of the invention, said data is compressed and encrypted with an algorithmically generated security key. To this end, the owner of the mobile device also has to authenticate himself through said first application software (App) and said first application software includes a database to store said data as received and encrypted before.

Also referring to safety considerations is another embodiment of the inventive method, wherein the encrypted data stored in the first applications database is secured against access by the owner of the mobile device, regardless of whether it is server data or log data.

In another embodiment of the inventive method said first application software is programmed to automatically connect to said communication unit in the vehicle whenever the mobile device is within the transmission range of a wireless local network connecting the vehicle and said mobile device, and to automatically transmit said data in encrypted format.

In this way, a completely automatic transmission of data can be realised without the owner of the mobile device being required to excessively intervene. This is particularly operational in another embodiment of the method according to the invention, where, in a vehicle control unit, a second programmed application software is foreseen which is working cooperatively with said first application software in the mobile device.

Another embodiment of the invention is related to a method where, in the event that said data should be transmitted to the vehicle, said first and second application software work cooperatively as follows:
- after connecting the mobile device to the vehicle, a decryption of said data to be transmitted is executed,
- a flashing of the control unit in the vehicle with updated software and data is executed,
- a return message designating the latest state of software and data available in the vehicle is downloaded to the mobile device,
whereby the owner is prompted to download the return message from the mobile device to the server as soon as the server is accessible again via Internet.

In this way, it is ensured that the current status of the autonomous vehicle and the current software included therein is traceable and present on the server or in the control centre at any time.

In another embodiment of the inventive method the encrypted data in the first applications database is deleted after executing the download of the return message to the server. This prevents accidentally using outdated versions of the software or older data on further connections between server, mobile device and autonomous vehicle.

Another embodiment of the invention belongs to a method, where in the event that there is a logging request for vehicle log-data said first and second application software work cooperatively as follows;
- after connecting the mobile device to the vehicle, the owner is prompted to select a logging period, said selection is transferred to the vehicle through the mobile device,
- after compressing log-data by the second application software and protecting it with an algorithmically generated security key said log-data is transmitted to the mobile application and stored in the mobile application database in encrypted format,
- said log-data is automatically transferred from the mobile device to the server by the first application software, when the server is accessible again via Internet.

In this way, the operational data of the autonomous vehicle collected within a specified period of time can be recorded and transmitted to the server or to another control centre without continuous network coverage or a continuously available radio network between server and vehicle being required.

Also, in this case of data transmission, it is an embodiment of the inventive method to delete the encrypted log-data in the first applications database after transferring it to the server. As mentioned above, this prevents accidentally using outdated versions of the software or older data.

An embodiment of the invention belongs to a method, wherein said data at least partly is stored or processed by cloud-based programs or servers. This facilitates access to the relevant data from different places, vehicles, and for users. Moreover, storage space or computing capacity does not have to be expanded at elevated levels in individual places.

Another embodiment of the invention is characterized in using the method in particular for remote monitoring, diagnostics and control of agricultural vehicles or mining vehicles.

Precisely for agricultural vehicles or for vehicles in surface mining or on factory premises, the method is particularly suitable for solving the conflict of goals already mentioned above which resides in that operation frequently fails due to the lack of a stable data connection where autonomous vehicles are reasonably deployable without much effort.

Still another embodiment belongs to a communication unit or control unit in a vehicle, being provided with data processing means to perform inventive method, whereby said communication or control unit comprises transmitting means to transfer data within a wireless local network connecting the vehicle and a mobile device.

Yet another embodiment of the invention belongs to an autonomous off-highway vehicle, in particular farming tractor or agricultural vehicle, with such a communication unit or control unit to perform the inventive method.

Still another embodiment of the invention belongs to an application software (app) to perform the inventive method, said application software being storable on a mobile device and/or in a communication or control unit of a vehicle, providing communication between mobile device, vehicle and the internet.

Still another embodiment of the invention belongs to a computer program comprising program code means for performing the steps to be executed by the mobile device of the method according to the invention when said program is run on a computer of said mobile device.

Still another embodiment of the invention belongs to a computer program comprising program code means for performing the steps to be executed by the communication unit or the control unit of the vehicle of the method according to the invention when said program is run on a computer of the communication unit or the control unit of the vehicle.

At least another embodiment of the invention belongs to mobile device, in particular smart phone, comprising a computer program for said mobile device.

The invention is to be explained in more detail with the aid of an embodiment, whereat
- Fig. 1: shows the basic principle of the method according to the invention in the form of a diagram,
- Fig. 2: shows a flow diagram illustrating the fundamental steps of a first part of the method according to the invention,
- Fig. 3: shows a flow diagram illustrating the fundamental steps of a second part of the method according to the invention.

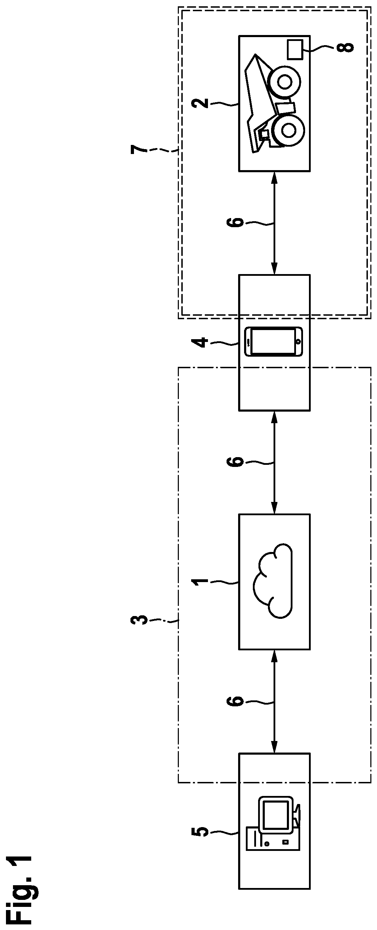

Fig. 1 shows in the form of a diagram the basic principle of the method according to the invention in which remote monitoring, remote diagnosis and control of an autonomously and automatically driving vehicle operated off publicly accessible areas, i.e. not located on public roads, paths or lanes, is performed.

For operating such a vehicle, data 6 have to be exchanged between at least one control entity implemented as a cloud server 1 and an autonomously and automatically driving heavy load vehicle 2 in a stone quarry. These data include, for example, updates of software for such a vehicle, operational data (log data) of the vehicle, measurement data, diagnosis data for the vehicle equipment, etc. With the method according to the invention, such data can be exchanged even when the vehicle 2 is not positioned in the range of a commonly accessible radio network or has no stable Internet connection 3. The Internet connection or the radio network 3 is shown by the dash-dot line in Fig. 1. The Internet connection 3 thus includes the cloud server 1, a mobile device 4 located within the radio network/Internet 3 at certain points in time, as well as also a control or development centre 5 here which, for example, develops new software and makes it available through the cloud server 1. However, the control or development centre 5 may also acquire operational data of the vehicle 2, analyse them statistically, and determine instructions for general maintenance therefrom.

When transmitted from the server 1 to the vehicle 2 the data 6 are first transmitted to the mobile device 4 in an encrypted form and are stored there. The mobile device 4 is, for example, a mobile telephone owned by the operator of the heavy load vehicle 2 and only sometimes located in the vicinity of the vehicle, but then - in the close vicinity of the vehicle - capable of establishing a wireless connection 7 to the vehicle 2. In the diagram, the wireless connection 7 in the close range of the vehicle 2 is represented by a double-dash line.

The data transmission is then performed so that, following a request by associated program routines of the cloud server 1, the owner of the mobile telephone / mobile device 4 heads towards the vicinity of the autonomous vehicle 2 and initiates the appropriate measures for either data transfer or the acquisition of operational data (log data) there.

In the event that data 6 shall be transmitted from the server 1 to the vehicle 2, a first download of said data from the server 1 to the mobile device 4 is triggered by the server 1 through push notification and download request to an owner of the mobile device 4, whereby the owner is also prompted to activate a second download of said data 6 from the mobile device 4 to a communication unit 8 in the vehicle 2, whenever the mobile device 4 is in the vicinity of the autonomous off-highway vehicle 2 and within the reception range of a wireless local network 7 being able to connect the vehicle 2 and the mobile device 4.

In an opposite case, i.e., in the event that there is a logging request from the cloud server 1 for vehicle log-data or for operating data of the vehicle 2 ,a push notification to an owner of the mobile device 4 is triggered by the server, prompting the owner to first download selected log-data of the autonomous off-highway vehicle 2 to the mobile device 4 whenever the latter is within the reception range of said wireless local network 7, and to subsequently transfer said selected log-data by a second download from the mobile device 4 to the server 1 as soon as the server 1 is accessible again via Internet 3.

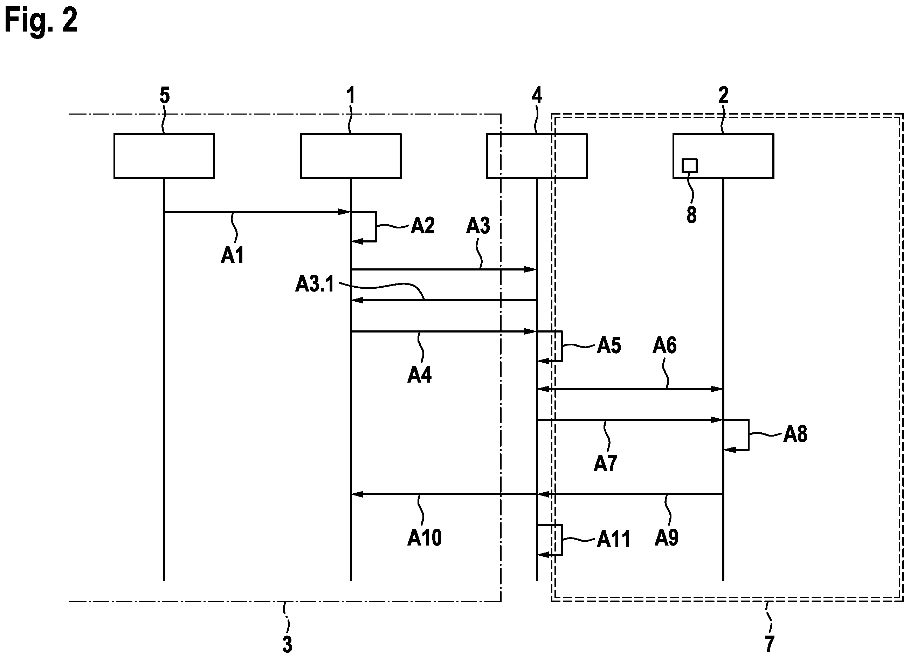

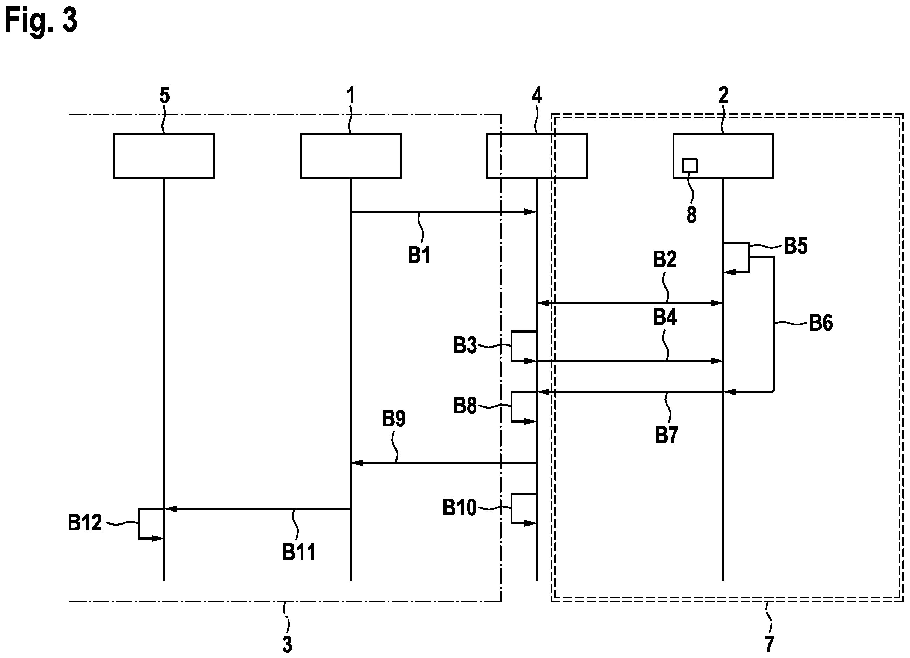

Figs. 2 and 3 respectively show a flow diagram illustrating the fundamental steps of the method according to the invention which are to be performed by the individual means 1, 2, 4, and 5 required for performing the method. Here, Fig. 2 shows the case in which data 6 are transmitted to an autonomous vehicle 2 from a cloud server 1. Fig. 3, in contrast, shows the case in which the operational data or logs from the vehicle 2 are transmitted to the cloud server 1.

In Fig. 2, a first step or a first action A1 can be seen which involves the transmission of a new software update for the vehicle 2 by the control center 5 to the cloud server 1 via the Internet 3. In the cloud server 1, then, action A2 is performed in which the data package is encrypted. Furthermore, action A3 is performed, namely a notification transmitted via an Internet connection 3, a so-called "push notification", to the mobile device 4 indicating that a software update is available. Likewise possible is an action A3.1 enabling a request from the mobile device 4 as to whether, for example, a new software update is available.

Accordingly, when a new software update is available or an update is intended, an action A4 is performed in which the encrypted data of the software update are downloaded into the mobile device 4 via the existing Internet connection 3. In a subsequent step A5, the transmitted data are stored in the corresponding app for software updating in the mobile device 4.

As soon as the app of the mobile device 4 determines that the mobile device 4 is in the close range, i.e. in the vicinity of the autonomous vehicle 2, a wireless local connection 7 between the mobile device 4 and the autonomous vehicle 2 is established in an action A6, for example by establishing a temporary Wi-Fi or Bluetooth connection.

As soon as the wireless connection 7 is established and secured, the encrypted data of the software update are transmitted to the vehicle 2 or to an application software (app) installed in a control or communication unit 8 there in a step A7 and decrypted in a following step A8.

After the download in step A7 and decryption in step A8 of the data of the software update in the vehicle 2, the update status of the vehicle 2 is first reported to the mobile device 4 in a step A9, and later, when the mobile device 4 is in an area having a functioning Internet coverage 3 again, uploaded to the cloud server 1 in a step A10. Subsequently, only a deletion of the encrypted data still present in the mobile device 4 is performed in a final step A11.

Fig. 3 shows the case in which, in a step or in an action B1, a request to acquire operational data of the autonomous vehicle 2, i.e. the request to transmit operational data or logs from the vehicle 2 back to the cloud server 1 is transmitted by the server 1 to the mobile device 4 or to its owner via an existing Internet connection 3 so that they can be processed there or in another facility 5.

Following this request, the owner of the mobile device will head for the vicinity of the autonomous vehicle 2 with the mobile device 4. If this is the case, i.e. when the mobile device 4 is in the close range, in the vicinity of the autonomous vehicle 2 a wireless local connection 7 is established between the mobile device 4 and the autonomous vehicle 2 in an action B2, for example by establishing a temporary Wi-Fi or Bluetooth connection. This establishment of a connection substantially corresponds to step A6 as shown in Fig. 1.

In an action B3, then, for which period of time a transmission of the operational data of the vehicle 2 is requested is specified by the owner or the mobile device 4. Subsequently, this time determination is transmitted to the vehicle 2 or to its control or communication unit 8 and the communicating second application software (app) installed there in a step/an action B4.

In the control unit of the vehicle 2 or in the application software present there, a compilation (a log file) for the requested period of time is prepared in an action B5 and packed and encrypted in a step B6. A step B7 follows in which the encrypted data are transmitted to the mobile device via the established local wireless connection 7.

In a step B8 substantially corresponding to step A5 of Fig. 2, the transmitted data will then be saved in the app on the mobile device 4. When the local device is then moved away from the close vicinity of the vehicle 2 and out of the wireless local connection and has eventually reconnected to the cloud server 1 via an existing Internet connection 3 the requested operational data (log file, log data) are transmitted to the cloud server 1 in a step B9. Then, the operational data can be transferred to a control or development center 5 which will process and statistically analyse the operational data and determine instructions for the general maintenance therefrom in actions/steps B11 and B12.

Important in any case is also the step or action B10 provided for in the mobile device 4 which involves the deletion of the encrypted data in the mobile device 4 after the transmission of the data to the cloud server 1.

### List of Reference Numbers

### (Part of the specification)

- 1: Cloud Server
- 2: Autonomous Vehicle
- 3: Internet Connection, Radio Network
- 4: Mobile Device
- 5: Software Development Center, Control Center
- 6: Data
- 7: Wireless local Network
- 8: Control Unit / Communication Unit

- A1: Transfer of Data 6 for Software Update to Cloud-Server 1
- A2: Compress and encode Data 6
- A3: Send Push Notification
- A3.1: Check for availability of Software Update
- A4: Download Software Update to Mobile Device 4
- A5: Store encrypted Software Update in Mobile Device 4
- A6: Establish connection to Wireless local Network 7
- A7: Send encrypted Software Update to autonomous Vehicle 2
- A8: Decrypt and uncompress Data 6
- A9: Send status of Update Version to Mobile Device 4
- A10: Send status of Update Version to Server 1
- A11: Delete encrypted Data 6 from the Mobile Device 4

- B1: Send Push Notification for Logging Request
- B2: Establish connection to Wireless local Network 7
- B3: Select time period for log data
- B4: Communicate selected time period for log data to Vehicle 2
- B5: Generate log file for time period
- B6: Compress and encode log file / log data
- B7: Transfer log data / log file to Mobile Device 4
- B8: Store encrypted log data / log file in Mobile Device 4
- B9: Send log data / log file to Server 1
- B10: Delete encrypted log data / log file from Mobile Device 4
- B11: Transfer log data / log file to Control- and Development Center 5
- B12: Evaluate log data / log file

## Claims

1. A method for remote monitoring, diagnosis and control of an autonomous off-highway vehicle (2), wherein data (6), comprising software updates and log-data for performing said monitoring, diagnosis data and control data is transmitted between an Internet-accessible server (1) and a communication unit (8) in the vehicle that is not accessible via the Internet (3), said transmission executed through at least one other intermediary mobile device (4), said data being temporarily cached in the mobile device (4), whereby
- in the event that said data (6) should be transmitted from the server (1) to the vehicle (2), a first download (A4) of said data (6) from the server (1) to the mobile device (4) is triggered by the server (1) through a push notification (A3) and a download request to an owner of the mobile device (4), whereby the owner is also prompted to activate a second download (A7) of said data from the mobile device (4) to the communication unit (8) in the vehicle (2), whenever the mobile device (4) is in the vicinity of the autonomous off-highway vehicle (2) and within the transmission range of a wireless local network (7) connecting the vehicle (2) and said mobile device (4),
whereby
- in the event that, with reference to said data (6), there is a logging request for vehicle log-data from the server (1), a push notification (B1) to said owner of the mobile device (4) is triggered by the server (1), prompting the owner to first download (B7) selected log-data of the autonomous off-highway vehicle (2) to the mobile device (4) whenever the latter is within the reception range of said wireless local network (7), and to subsequently transfer said selected log-data by a second download (B9) from the mobile device (4) to the server (1) when the server (1) is accessible again via Internet (3).

2. The method according to claim 1, wherein the mobile device (4) provides a first programmed application software -app-through which software updates, software changes and logging data can be detected, selected and transmitted.

3. The method according to claim 1 or 2, wherein said data (6) is compressed and encryptedciphered with an algorithmically generated security key.

4. The method according to one of the claims 1 to 3, wherein the owner of the mobile device (4) has to authenticate himself through said first application software.

5. The method according to one of the claims 1 to 4, wherein said first application software includes a database to store said data (6) as received and encrypted before.

6. The method according to one of the claims 1 to 5, wherein the encrypted data stored in the first applications database is secured against access by the owner of the mobile device (4), regardless of whether it is server data or log data.

7. The method according to one of the claims 1 to 6, wherein said first application software is programmed to automatically connect to said communication unit (8) in the vehicle (2) whenever the mobile device (4) is within the reception range of a wireless local network (7) connecting the vehicle (2) and said mobile device (4), and to automatically transmit said data in encrypted format.

8. The method according to one of the claims 1 to 7, where in a vehicle control unit or communication unit (8) a second programmed application software is foreseen which is working cooperatively with said first application software in the mobile device (4).

9. The method according to one of the claims 1 to 8, where in the event that said data (6) should be transmitted to the vehicle (2) said first and second application software work cooperatively as follows:
- after connecting the mobile device (4) to the vehicle (2), a decryption (A8) of said data to be transmitted is executed by the second application software,
- a memory flashing of the control unit (8) in the vehicle (2) with updated software and data is executed,
- a return message (A9) designating the latest state of software and data available in the vehicle (2) is downloaded to the mobile device (4),
whereby the owner is prompted to download (A10) the return message from the mobile device (4) to the server (1) when the server (1) is accessible again via Internet (3).

10. The method according to claim 9, wherein the encrypted data (6) in the first applications database is deleted (A11) after executing the download of the return message to the server (1).

11. The method according to one of the claims 1 to 8, where in the event that there is a logging request (B1) for vehicle log-data said first and second application software work cooperatively as follows;
- after connecting (B2) the mobile device (4) to the vehicle (2), the owner is prompted to select a logging period (B3), said selection is transferred to the vehicle (B4) through the mobile device (4),
- after compressing (B6) log-data by the second application software and protecting it with algorithmically generated security key said log-data is transmitted (B7) to the mobile application (4) and stored (B8) in the mobile application database in encrypted format,
- said log-data is automatically transferred (B9) from the mobile device (4) to the server (1) by the first application software, when the server (1) is accessible again via Internet (3).

12. The method according to claim 11, wherein the encrypted log-data in the first application's database is deleted (B10) after transferring it to the server (1).

13. The method according to one of the claims 1 to 12, wherein said data (6) at least partly is stored or processed by cloud-based programs or servers (1).

14. The method according to one of the claims 1 to 13, in particular for remote monitoring, diagnostics and control of agricultural vehicles or mining vehicles.

15. Communication unit (8) or control unit in a vehicle (2), being provided with data processing means to perform a method according to one of the claims 1 to 14, whereby said communication or control unit (8) comprises transmitting means to transfer data within a wireless local network (7) connecting the vehicle (2) and a mobile device (4).

16. Autonomous Off-highway vehicle (2), in particular farming tractor or agricultural vehicle, with a communication unit (8) or control unit according to claim 15.

17. Application software to perform a method according to one of the claims 1 to 14, the application software being storable on a mobile device (4) and/or in a communication or control unit (8) of a vehicle (2), providing communication between mobile device (4), vehicle and the internet (3).

18. A computer program comprising program code means for performing the steps to be executed by the mobile device (4) of the method according to one of claims 1 to 14 when said program is run on a computer of said mobile device (4).

19. A computer program comprising program code means for performing the steps to be executed by the communication unit (8) or the control unit of the vehicle (2) of the method according to one of claims 1 to 14 when said program is run on a computer of said communication unit (8) or the control unit of the vehicle (2).

20. Mobile device, in particular smart phone, comprising a computer program according to claim 19.

## Patentansprüche

1. Verfahren zum Fernüberwachen, für eine Diagnose und eine Steuerung eines autonomen geländegängigen Fahrzeugs (2), wobei Daten (6), umfassend Software-Aktualisierungen und Protokolldaten zum Durchführen des Überwachens, Diagnosedaten und Steuerdaten zwischen einem über das Internet zugänglichen Server (1) und einer Kommunikationseinheit (8) in dem Fahrzeug, die nicht über das Internet (3) zugänglich ist, übermittelt werden, wobei die Übermittlung durch mindestens eine andere dazwischengeschaltete mobile Vorrichtung (4) ausgeführt wird, wobei die Daten in der mobilen Vorrichtung (4) temporär zwischengespeichert werden, wobei dadurch
- in dem Fall, dass die Daten (6) von dem Server (1) an das Fahrzeug (2) übermittelt werden sollen, ein erster Download (A4) der Daten (6) von dem Server (1) auf die mobile Vorrichtung (4) durch den Server (1) durch eine Push-Benachrichtigung (A3) und eine Download-Anforderung an einen Besitzer der mobilen Vorrichtung (4) ausgelöst wird, wobei dadurch der Besitzer ebenso aufgefordert wird, einen zweiten Download (A7) der Daten von der mobilen Vorrichtung (4) auf die Kommunikationseinheit (8) in dem Fahrzeug (2) zu aktivieren, wann immer sich die mobile Vorrichtung (4) in der Nähe des autonomen geländegängigen Fahrzeugs (2) und innerhalb der Übermittlungsreichweite eines drahtlosen lokalen Netzwerks (7) befindet, das das Fahrzeug (2) und die mobile Vorrichtung (4) verbindet,
wobei dadurch
- in dem Fall, dass unter Bezugnahme auf die Daten (6), eine Protokollierungsanforderung für Fahrzeugprotokolldaten von dem Server (1) vorliegt, eine Push-Benachrichtigung (B1) an den Besitzer der mobilen Vorrichtung (4) durch den Server (1) ausgelöst wird, die den Besitzer auffordert, zunächst ausgewählte Protokolldaten des autonomen geländegängigen Fahrzeugs (2) auf die mobile Vorrichtung (4) herunterzuladen (B7), wann immer sich letzteres innerhalb der Empfangsreichweite des drahtlosen lokalen Netzwerks (7) befindet, und anschließend die ausgewählten Protokolldaten durch einen zweiten Download (B9) von der mobilen Vorrichtung (4) an den Server (1) zu übertragen, wenn der Server (1) über das Internet (3) wieder zugänglich ist.

2. Verfahren nach Anspruch 1, wobei die mobile Vorrichtung (4) eine erste programmierte Anwendungssoftware -App- bereitstellt, durch die Software-Aktualisierungen, Software-Änderungen und Protokollierungsdaten erkannt, ausgewählt und übermittelt werden können.

3. Verfahren nach Anspruch 1 oder 2, wobei die Daten (6) mit einem algorithmisch erzeugten Sicherheitsschlüssel komprimiert und verschlüsselt werden.

4. Verfahren nach einem der Ansprüche 1 bis 3, wobei sich der Besitzer der mobilen Vorrichtung (4) durch die erste Anwendungssoftware authentifizieren muss.

5. Verfahren nach einem der Ansprüche 1 bis 4, wobei die erste Anwendungssoftware eine Datenbank einschließt, um die Daten (6) wie zuvor empfangen und verschlüsselt zu speichern.

6. Verfahren nach einem der Ansprüche 1 bis 5, wobei die in der Datenbank der ersten Anwendung gespeicherten verschlüsselten Daten gegen Zugang durch den Besitzer der mobilen Vorrichtung (4) gesichert sind, unabhängig davon, ob es Serverdaten oder Protokolldaten sind.

7. Verfahren nach einem der Ansprüche 1 bis 6, wobei die erste Anwendungssoftware programmiert ist, um sich mit der Kommunikationseinheit (8) in dem Fahrzeug (2) automatisch zu verbinden, wann immer sich die mobile Vorrichtung (4) innerhalb der Empfangsreichweite eines drahtlosen lokalen Netzwerks (7) befindet, das das Fahrzeug (2) und die mobile Vorrichtung (4) verbindet, und um die Daten in verschlüsseltem Format automatisch zu übermitteln.

8. Verfahren nach einem der Ansprüche 1 bis 7, wobei in einer Fahrzeugsteuereinheit oder einer Kommunikationseinheit (8) eine zweite programmierte Anwendungssoftware vorgesehen ist, die mit der ersten Anwendungssoftware in der mobilen Vorrichtung (4) zusammenwirkt.

9. Verfahren nach einem der Ansprüche 1 bis 8, wobei in dem Fall, dass die Daten (6) an das Fahrzeug (2) übermittelt werden sollen, die erste und die zweite Anwendungssoftware wie folgt zusammenwirken:
- nach dem Verbinden der mobilen Vorrichtung (4) mit dem Fahrzeug (2) wird eine Entschlüsselung (A8) der zu übermittelnden Daten durch die zweite Anwendungssoftware ausgeführt,
- ein Memory-Flashing der Steuereinheit (8) in dem Fahrzeug (2) mit aktualisierter Software und Daten wird ausgeführt,
- eine Antwortnachricht (A9), die den neuesten Stand der in dem Fahrzeug (2) verfügbaren Software und Daten nennt, wird auf die mobile Vorrichtung (4) heruntergeladen,
wobei dadurch der Besitzer aufgefordert wird, die Antwortnachricht von der mobilen Vorrichtung (4) auf den Server (1) herunterzuladen (A10), wenn der Server (1) über das Internet (3) wieder zugänglich ist.

10. Verfahren nach Anspruch 9, wobei die verschlüsselten Daten (6) in der Datenbank der ersten Anwendung nach dem Ausführen des Downloads der Antwortnachricht auf den Server (1) gelöscht werden (A11).

11. Verfahren nach einem der Ansprüche 1 bis 8, wobei in dem Fall, dass eine Protokollierungsanforderung (B1) für Fahrzeugprotokolldaten vorliegt, die erste und die zweite Anwendungssoftware wie folgt zusammenwirken;
- nach dem Verbinden (B2) der mobilen Vorrichtung (4) mit dem Fahrzeug (2) wird der Besitzer aufgefordert, einen Protokollierungszeitraum (B3) auszuwählen, wobei die Auswahl durch die mobile Vorrichtung (4) an das Fahrzeug (B4) übertragen wird,
- nach dem Komprimieren (B6) von Protokolldaten durch die zweite Anwendungssoftware und einem Schützen dieser mit einem algorithmisch erzeugten Sicherheitsschlüssel werden die Protokolldaten an die mobile Anwendung (4) übermittelt (B7) und in der Datenbank der mobilen Anwendung in verschlüsseltem Format gespeichert (B8),
- die Protokolldaten werden automatisch von der mobilen Vorrichtung (4) an den Server (1) durch die erste Anwendungssoftware übertragen (B9), wenn der Server (1) über das Internet (3) wieder zugänglich ist.

12. Verfahren nach Anspruch 11, wobei die verschlüsselten Protokolldaten in der Datenbank der ersten Anwendung nach dem Übertragen dieser an den Server (1) gelöscht werden (B10).

13. Verfahren nach einem der Ansprüche 1 bis 12, wobei die Daten (6) mindestens teilweise durch Cloud-basierte Programme oder Server (1) gespeichert oder verarbeitet werden.

14. Verfahren nach einem der Ansprüche 1 bis 13, insbesondere zum Fernüberwachen, für die Diagnose und die Steuerung von Landmaschinen oder Bergbaufahrzeugen.

15. Kommunikationseinheit (8) oder Steuereinheit in einem Fahrzeug (2), die mit Datenverarbeitungsmitteln versehen ist, um ein Verfahren nach einem der Ansprüche 1 bis 14 durchzuführen, wobei dadurch die Kommunikationseinheit oder die Steuereinheit (8) Übermittlungsmittel umfasst, um Daten innerhalb eines drahtlosen lokalen Netzwerks (7) zu übertragen, das das Fahrzeug (2) und eine mobile Vorrichtung (4) verbindet.

16. Autonomes geländegängiges Fahrzeug (2), insbesondere Ackerschlepper oder Landmaschine, mit einer Kommunikationseinheit (8) oder einer Steuereinheit nach Anspruch 15.

17. Anwendungssoftware, um ein Verfahren nach einem der Ansprüche 1 bis 14 durchzuführen, wobei die Anwendungssoftware auf einer mobilen Vorrichtung (4) und/oder in einer Kommunikations- oder einer Steuereinheit (8) eines Fahrzeugs (2) speicherbar ist, die Kommunikation zwischen der mobilen Vorrichtung (4), dem Fahrzeug und dem Internet (3) bereitstellt.

18. Computerprogramm, umfassend Programmcodemittel zum Durchführen der durch die mobile Vorrichtung (4) auszuführenden Schritte des Verfahrens nach einem der Ansprüche 1 bis 14, wenn das Programm auf einem Computer der mobilen Vorrichtung (4) abläuft.

19. Computerprogramm, umfassend Programmcodemittel zum Durchführen der durch die Kommunikationseinheit (8) oder die Steuereinheit des Fahrzeugs (2) auszuführenden Schritte des Verfahrens nach einem der Ansprüche 1 bis 14, wenn das Programm auf einem Computer der Kommunikationseinheit (8) oder der Steuereinheit des Fahrzeugs (2) abläuft.

20. Mobile Vorrichtung, insbesondere Smartphone, umfassend ein Computerprogramm nach Anspruch 19.

## Revendications

1. Procédé de surveillance, de diagnostic et de commande à distance d'un véhicule (2) hors route autonome, dans lequel des données (6), comprenant des mises à jour logicielles et des données de journal pour réaliser ladite surveillance, des données de diagnostic et des données de commande sont transmises entre un serveur accessible par Internet (1) et une unité de communication (8) dans le véhicule qui n'est pas accessible par l'intermédiaire d'Internet (3), ladite transmission étant exécutée par le biais d'au moins un autre dispositif mobile (4) intermédiaire, lesdites données étant temporairement mises en cache dans le dispositif mobile (4), moyennant quoi
- dans le cas où lesdites données (6) doivent être transmises du serveur (1) au véhicule (2), un premier téléchargement (A4) desdites données (6) du serveur (1) au dispositif mobile (4) est déclenché par le serveur (1) par le biais d'une notification poussée (A3) et d'une demande de téléchargement à un propriétaire du dispositif mobile (4), moyennant quoi le propriétaire est également invité à activer un second téléchargement (A7) desdites données du dispositif mobile (4) à l'unité de communication (8) dans le véhicule (2), chaque fois que le dispositif mobile (4) se trouve à proximité du véhicule (2) hors route autonome et dans la portée de transmission d'un réseau local sans fil (7) connectant le véhicule (2) et ledit dispositif mobile (4),
moyennant quoi
- dans le cas où, en référence auxdites données (6), il y a une demande de journalisation de données de journal de véhicule provenant du serveur (1), une notification poussée (B1) adressée audit propriétaire du dispositif mobile (4) est déclenchée par le serveur (1), invitant le propriétaire à télécharger d'abord (B7) des données de journal sélectionnées du véhicule (2) hors route autonome sur le dispositif mobile (4) chaque fois que ce dernier se trouve dans la portée de réception dudit réseau local sans fil (7), et pour transférer ensuite lesdites données de journal sélectionnées par un second téléchargement (B9) du dispositif mobile (4) au serveur (1) lorsque le serveur (1) est à nouveau accessible par l'intermédiaire d'Internet (3).

2. Procédé selon la revendication 1, dans lequel le dispositif mobile (4) fournit un premier logiciel d'application programmé -app- par le biais duquel des mises à jour logicielles, des modifications logicielles et des données de journalisation peuvent être détectées, sélectionnées et transmises.

3. Procédé selon la revendication 1 ou 2, dans lequel lesdites données (6) sont compressées et chiffréescryptées à l'aide d'une clé de sécurité générée par un algorithme.

4. Procédé selon l'une des revendications 1 à 3, dans lequel le propriétaire du dispositif mobile (4) doit s'authentifier par le biais dudit premier logiciel d'application.

5. Procédé selon l'une des revendications 1 à 4, dans lequel ledit premier logiciel d'application comporte une base de données pour stocker lesdites données (6) telles qu'elles ont été reçues et chiffrées auparavant.

6. Procédé selon l'une des revendications 1 à 5, dans lequel les données chiffrées stockées dans la première base de données d'applications sont protégées contre l'accès par le propriétaire du dispositif mobile (4), qu'il s'agisse de données de serveur ou de données de journal.

7. Procédé selon l'une des revendications 1 à 6, dans lequel ledit premier logiciel d'application est programmé pour se connecter automatiquement à ladite unité de communication (8) dans le véhicule (2) chaque fois que le dispositif mobile (4) se trouve dans la portée de réception d'un réseau local sans fil (7) connectant le véhicule (2) et ledit dispositif mobile (4), et pour transmettre automatiquement lesdites données sous format chiffré.

8. Procédé selon l'une des revendications 1 à 7, dans lequel, dans une unité de commande ou une unité de communication (8) de véhicule, un second logiciel d'application programmé est prévu qui fonctionne en coopération avec ledit premier logiciel d'application dans le dispositif mobile (4).

9. Procédé selon l'une des revendications 1 à 8, dans lequel, dans le cas où lesdites données (6) doivent être transmises au véhicule (2), lesdits premier et second logiciels d'application fonctionnent en coopération comme suit :
- après connexion du dispositif mobile (4) au véhicule (2), un déchiffrement (A8) desdites données à transmettre est exécuté par le second logiciel d'application,
- un clignotement de mémoire de l'unité de commande (8) dans le véhicule (2) avec un logiciel et des données mis à jour est exécutée,
- un message de retour (A9) désignant le dernier état du logiciel et des données disponibles dans le véhicule (2) sont téléchargées sur le dispositif mobile (4),
moyennant quoi le propriétaire est invité à télécharger (A10) le message de retour du dispositif mobile (4) au serveur (1) lorsque le serveur (1) est à nouveau accessible par l'intermédiaire d'Internet (3).

10. Procédé selon la revendication 9, dans lequel les données chiffrées (6) dans la première base de données d'applications sont supprimées (A11) après l'exécution du téléchargement du message de retour vers le serveur (1).

11. Procédé selon l'une des revendications 1 à 8, dans lequel, dans le cas où il y a une demande de journalisation (B1) pour des données de journal de véhicule, lesdits premier et second logiciels d'application fonctionnent en coopération comme suit ;
- après connexion (B2) du dispositif mobile (4) au véhicule (2), le propriétaire est invité à sélectionner une période de journalisation (B3), ladite sélection est transférée au véhicule (B4) par le biais du dispositif mobile (4),
- après la compression (B6) de données de journal par le second logiciel d'application et leur protection avec une clé de sécurité générée par algorithme, lesdites données de journal sont transmises (B7) à l'application mobile (4) et stockées (B8) dans la base de données d'application mobile en format chiffré,
- lesdites données de journal sont automatiquement transférées (B9) du dispositif mobile (4) au serveur (1) par le premier logiciel d'application, lorsque le serveur (1) est à nouveau accessible par l'intermédiaire d'Internet (3).

12. Procédé selon la revendication 11, dans lequel les données de journal chiffrées dans la base de données de la première application sont supprimées (B10) après leur transfert vers le serveur (1).

13. Procédé selon l'une des revendications 1 à 12, dans lequel lesdites données (6) sont au moins partiellement stockées ou traitées par des programmes ou serveurs basés sur le nuage (1).

14. Procédé selon l'une des revendications 1 à 13, en particulier pour la surveillance, le diagnostic et la commande à distance de véhicules agricoles ou de véhicules miniers.

15. Unité de communication (8) ou unité de commande dans un véhicule (2), pourvue d'un moyen de traitement de données pour réaliser un procédé selon l'une des revendications 1 à 14, moyennant quoi ladite unité de communication ou de commande (8) comprend un moyen de transmission pour transférer des données au sein d'un réseau local sans fil (7) connectant le véhicule (2) et un dispositif mobile (4).

16. Véhicule (2) hors route autonome, en particulier tracteur de ferme ou véhicule agricole, avec une unité de communication (8) ou une unité de commande selon la revendication 15.

17. Logiciel d'application pour réaliser un procédé selon l'une des revendications 1 à 14, le logiciel d'application pouvant être stocké sur un dispositif mobile (4) et/ou dans une unité de communication ou de commande (8) d'un véhicule (2), fournissant une communication entre le dispositif mobile (4), le véhicule et l'Internet (3).

18. Programme informatique comprenant un moyen de code de programme destiné à réaliser les étapes à exécuter par le dispositif mobile (4) du procédé selon l'une des revendications 1 à 14 lorsque ledit programme est exécuté sur un ordinateur dudit dispositif mobile (4).

19. Programme informatique comprenant un moyen de code de programme permettant de réaliser les étapes à exécuter par l'unité de communication (8) ou l'unité de commande du véhicule (2) du procédé selon l'une des revendications 1 à 14 lorsque ledit programme est exécuté sur un ordinateur de ladite unité de communication (8) ou de l'unité de commande du véhicule (2).

20. Dispositif mobile, en particulier mobile multifonction, comprenant un programme informatique selon la revendication 19.
